# EUROPEAN PATENT APPLICATION

(11) **EP 2 650 965 A2**
(43) Date of publication of application: **16.10.2013**
(21) Application number: 13163010.5
(22) Date of filing: 09.04.2013
(51) Int. Cl.: H01Q 1/24, H01Q 21/28, H04B 7/04

(54) **Optimized uplink performance via antenna selection**

(30) Priority: 09.04.2012 US 201213442469
(71) Applicant: BlackBerry Limited, Waterloo, ON N2L 3W8 (CA)
(72) Inventor: Buckley, Michael Eoin, Rolling Meadows, IL 60008 (US); Ali, Shirook M., Waterloo, Ontario N2L 3W8 (CA); Zielinski, Ernest Slawomir, 44799 Bochum (DE); Vutukuri, Eswar, Hedge End, Hampshire SO30 0PE (GB); Deforge, John Bradley, Ottawa, Ontario K2K 3K2 (CA)
(74) Representative: Bryn-Jacobsen, Caelia

(57) **Abstract**

Embodiments of the disclosure provide systems and methods for improving user equipment performance in up-link transmission by implementing antenna selection based on channel measurements in the down-link. In various embodiments, first and second antennas are used to receive desired signals on a downlink and to transmit signals on an uplink. A plurality of signals received on the downlink are used to generate a plurality of antenna parameter measurements derived from multiple correlations of a known reference sequence of data signals transmitted on the downlink. The plurality of antenna parameter measurements is then used to select either the first antenna or the second antenna for transmitting data signals by said user equipment device on the uplink.

## Description

### BACKGROUND OF THE DISCLOSURE

### Field of the Disclosure

The present disclosure is directed in general to communication systems and, more specifically, to systems and methods for real-time measurement of antenna performance.

### Description of the Related Art

With ever increasing requirements on wireless user equipment (UE) to support multiple modes along with higher data rates, it is inevitable that the UE hardware will become more advanced to support these requirements. One of the advances that will facilitate advances in UE performance is improving performance in the up-link (UL) transmission scheme via antenna selection based on channel measurements in the down-link (DL). This feature offers the possibility of significant improvement in future wireless technologies.

Antenna selection is an antenna diversity technique generally used to improve the quality and the reliability of a wireless link. The diversity is based on having the choice to transmit on antennas that experience different near-field environments due to, for example, the presence of the operating user and the close surroundings that each of the antennas sees. The propagation channel characteristics that each antenna experiences is likely be different from one antenna to another. This adds another factor for implementing antenna diversity, since each of the antennas may experience different fading levels for the same usage scenario.

In UL antenna selection, an uplink signal is fed into one of several available antennas for UL transmission where the antenna selected is based on some optimization criterion. Even if each antennas is identically designed and offers identical free space (FS) characteristics both for reception and transmission, it is highly probable that one of the antennas will offer a better long term link performance in practical usage cases due to real-world effects such as hand(s) and/or head placement on the UE. Therefore, the goal is to select the antenna that provides better long term UL performance in practical usage cases. Furthermore, under the assumption that real-world effects equally impact both UL and DL performance, DL measurements can be used in selecting the antenna for UL transmission.

### BRIEF DESCRIPTION OF THE DRAWINGS

The present invention may be understood, and its numerous objects, features and advantages obtained, when the following detailed description is considered in conjunction with the following drawings, in which:

Figure 1 depicts an exemplary system in which the present invention may be implemented;

Figure 2 shows a wireless-enabled communications environment including an embodiment of a client node;

Figure 3 is a simplified block diagram of an exemplary client node comprising a digital signal processor (DSP);

Figure 4 is a simplified block diagram of a software environment that may be implemented by a DSP;

Figures 5a and 5b are generalized illustrations of communication systems for implementing antenna diversity techniques in accordance with embodiments of the present disclosure;

Figures 6a-c illustrate multiple usage modes for a user equipment device;

Figure 7 shows the shows the imbalance between the two antennas defined as the difference in the measured Total Radiation Power (TRP) between the two antennas;

Figure 8 is an illustration of a user equipment device first and second antennas on the top and bottom of the device, respectively;

Figures 9a-f are illustrations of the impact of a user on antenna radiation patterns at 900 MHz;

Figures 10a-f are illustrations of the impact of a user on antenna radiation patterns at 1880 MHz;

Figures 11a-c are flowchart illustrations of processing steps for implementing embodiments of the disclosure;

Figures 12-14 are illustrations of example system block diagrams for implementing embodiments of the disclosure;

Figures 15 a-b illustrate the power density function of desired signal power at a plurality of antennas assuming a 3dB antenna gain imbalance for 500ms and 1ms measurement periods respectively;

Figures 16a-b show the probability of selecting an optimal uplink antenna using embodiments of the disclosure;

Figures 17a-b illustrate details of the power density function of desired signal power at plural antennas assuming a 3dB antenna gain imbalance for measurement periods of 0.1 seconds and 1 second respectively; and

Figures 18a-b the additional illustrations of the probability of selecting an optimal uplink antenna using embodiments of the disclosure.

### DETAILED DESCRIPTION

Embodiments of the disclosure provide systems and methods for improving UE performance in up-link (UL) transmission by implementing antenna selection based on channel measurements in the down-link (DL). Various illustrative embodiments of the present invention will now be described in detail with reference to the accompanying figures. While various details are set forth in the following description, it will be appreciated that the present invention may be practiced without these specific details, and that numerous implementation-specific decisions may be made to the invention described herein to achieve the inventor's specific goals, such as compliance with process technology or design-related constraints, which will vary from one implementation to another. While such a development effort might be complex and time-consuming, it would nevertheless be a routine undertaking for those of skill in the art having the benefit of this disclosure. For example, selected aspects are shown in block diagram and flowchart form, rather than in detail, in order to avoid limiting or obscuring the present invention. In addition, some portions of the detailed descriptions provided herein are presented in terms of algorithms or operations on data within a computer memory. Such descriptions and representations are used by those skilled in the art to describe and convey the substance of their work to others skilled in the art.

As used herein, the terms "component," "system" and the like are intended to refer to a computer-related entity, either hardware, software, a combination of hardware and software, or software in execution. For example, a component may be, but is not limited to being, a processor, a process running on a processor, an object, an executable, a thread of execution, a program, or a computer. By way of illustration, both an application running on a computer and the computer itself can be a component. One or more components may reside within a process or thread of execution and a component may be localized on one computer or distributed between two or more computers.

As likewise used herein, the term "node" broadly refers to a connection point, such as a redistribution point or a communication endpoint, of a communication environment, such as a network. Accordingly, such nodes refer to an active electronic device capable of sending, receiving, or forwarding information over a communications channel. Examples of such nodes include data circuit-terminating equipment (DCE), such as a modem, hub, bridge or switch, and data terminal equipment (DTE), such as a handset, a printer or a host computer (e.g., a router, workstation or server). Examples of local area network (LAN) or wide area network (WAN) nodes include computers, packet switches, cable modems, Data Subscriber Line (DSL) modems, and wireless LAN (WLAN) access points. Examples of Internet or Intranet nodes include host computers identified by an Internet Protocol (IP) address, bridges and WLAN access points. Likewise, examples of nodes in cellular communication include base stations, relays, base station controllers, radio network controllers, home location registers, Gateway GPRS Support Nodes (GGSN), Serving GPRS Support Nodes (SGSN), Serving Gateways (S-GW), and Packet Data Network Gateways (PDN-GW).

Other examples of nodes include client nodes, server nodes, peer nodes and access nodes. As used herein, a client node may refer to wireless devices such as mobile telephones, smart phones, personal digital assistants (PDAs), handheld devices, portable computers, tablet computers, and similar devices or other user equipment (UE) that has telecommunications capabilities. Such client nodes may likewise refer to a mobile, wireless device, or conversely, to devices that have similar capabilities that are not generally transpontable, such as desktop computers, set-top boxes, or sensors. Likewise, a server node, as used herein, refers to an information processing device (e.g., a host computer), or series of information processing devices, that perform information processing requests submitted by other nodes. As likewise used herein, a peer node may sometimes serve as client node, and at other times, a server node. In a peer-to-peer or overlay network, a node that actively routes data for other networked devices as well as itself may be referred to as a supernode.

An access node, as used herein, refers to a node that provides a client node access to a communication environment. Examples of access nodes include cellular network base stations and wireless broadband (e.g., WiFi, WiMAX, etc) access points, which provide corresponding cell and WLAN coverage areas. As used herein, a macrocell is used to generally describe a traditional cellular network cell coverage area. Such macrocells are typically found in rural areas, along highways, or in less populated areas. As likewise used herein, a microcell refers to a cellular network cell with a smaller coverage area than that of a macrocell. Such micro cells are typically used in a densely populated urban area. Likewise, as used herein, a picocell refers to a cellular network coverage area that is less than that of a microcell. An example of the coverage area of a picocell may be a large office, a shopping mall, or a train station. A femtocell, as used herein, currently refers to the smallest commonly accepted area of cellular network coverage. As an example, the coverage area of a femtocell is sufficient for homes or small offices.

In general, a coverage area of less than two kilometers typically corresponds to a microcell, 200 meters or less for a picocell, and on the order of 10 meters for a femtocell. As likewise used herein, a client node communicating with an access node associated with a macrocell is referred to as a "macrocell client." Likewise, a client node communicating with an access node associated with a microcell, picocell, or femtocell is respectively referred to as a "microcell client," "picocell client," or "femtocell client."

The term "article of manufacture" (or alternatively, "computer program product") as used herein is intended to encompass a computer program accessible from any computer-readable device or media. For example, computer readable media can include but are not limited to magnetic storage devices (e.g., hard disk, floppy disk, magnetic strips, etc.), optical disks such as a compact disk (CD) or digital versatile disk (DVD), smart cards, and flash memory devices (e.g., card, stick, etc.).

The word "exemplary" is used herein to mean serving as an example, instance, or illustration. Any aspect or design described herein as "exemplary" is not necessarily to be construed as preferred or advantageous over other aspects or designs. Those of skill in the art will recognize many modifications may be made to this configuration without departing from the scope, spirit or intent of the claimed subject matter. Furthermore, the disclosed subject matter may be implemented as a system, method, apparatus, or article of manufacture using standard programming and engineering techniques to produce software, firmware, hardware, or any combination thereof to control a computer or processor-based device to implement aspects detailed herein.

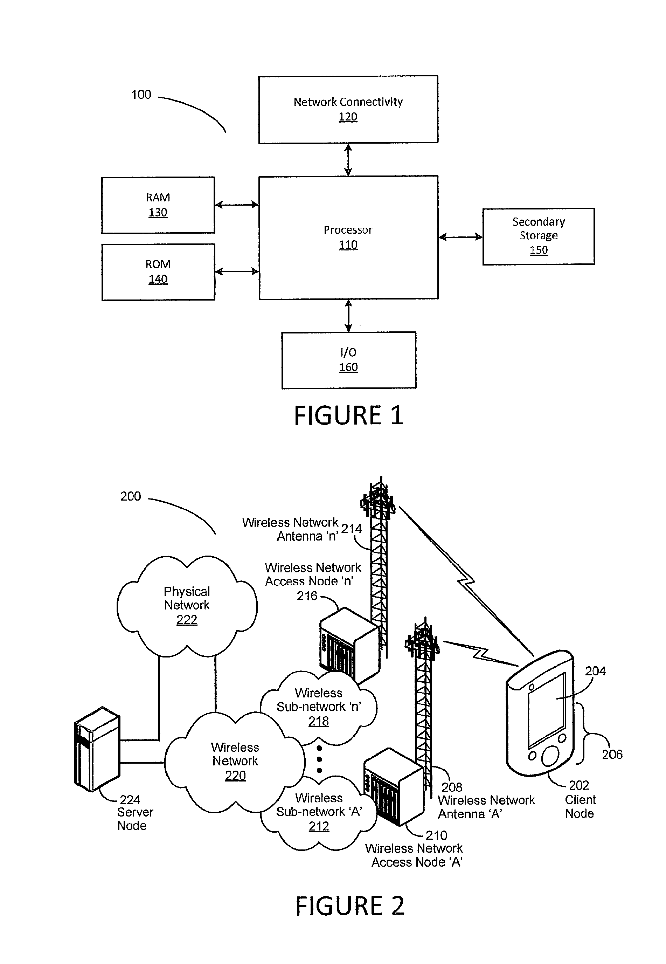

Figure 1 illustrates an example of a system 100 suitable for implementing one or more embodiments disclosed herein. In various embodiments, the system 100 comprises a processor 110, which may be referred to as a central processor unit (CPU) or digital signal processor (DSP), network connectivity interfaces 120, random access memory (RAM) 130, read only memory (ROM) 140, secondary storage 150, and input/output (I/O) devices 160. In some embodiments, some of these components may not be present or may be combined in various combinations with one another or with other components not shown. These components may be located in a single physical entity or in more than one physical entity. Any actions described herein as being taken by the processor 110 might be taken by the processor 110 alone or by the processor 110 in conjunction with one or more components shown or not shown in Figure 1.

The processor 110 executes instructions, codes, computer programs, or scripts that it might access from the network connectivity interfaces 120, RAM 130, or ROM 140. While only one processor 110 is shown, multiple processors may be present. Thus, while instructions may be discussed as being executed by a processor 110, the instructions may be executed simultaneously, serially, or otherwise by one or multiple processors 110 implemented as one or more CPU chips.

In various embodiments, the network connectivity interfaces 120 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, long term evolution (LTE) radio transceiver devices, worldwide interoperability for microwave access (WiMAX) devices, and/or other well-known interfaces for connecting to networks, including Personal Area Networks (PANs) such as Bluetooth. These network connectivity interfaces 120 may enable the processor 110 to communicate with the Internet or one or more telecommunications networks or other networks from which the processor 110 might receive information or to which the processor 110 might output information.

The network connectivity interfaces 120 may also be capable of transmitting or receiving data wirelessly in the form of electromagnetic waves, such as radio frequency signals or microwave frequency signals. Information transmitted or received by the network connectivity interfaces 120 may include data that has been processed by the processor 110 or instructions that are to be executed by processor 110. The data may be ordered according to different sequences as may be desirable for either processing or generating the data or transmitting or receiving the data.

In various embodiments, the RAM 130 may be used to store volatile data and instructions that are executed by the processor 110. The ROM 140 shown in Figure 1 may likewise be used to store instructions and data that is read during execution of the instructions. The secondary storage 150 is typically comprised of one or more disk drives or tape drives and may be used for non-volatile storage of data or as an overflow data storage device if RAM 130 is not large enough to hold all working data. Secondary storage 150 may likewise be used to store programs that are loaded into RAM 130 when such programs are selected for execution. The I/O devices 160 may include liquid crystal displays (LCDs), Light Emitting Diode (LED) displays, Organic Light Emitting Diode (OLED) displays, projectors, televisions, touch screen displays, keyboards, keypads, switches, dials, mice, track balls, voice recognizers, card readers, paper tape readers, printers, video monitors, or other well-known input/output devices.

Figure 2 shows a wireless-enabled communications environment including an embodiment of a client node as implemented in an embodiment of the invention. Though illustrated as a mobile phone, the client node 202 may take various forms including a wireless handset, a pager, a smart phone, or a personal digital assistant (PDA). In various embodiments, the client node 202 may also comprise a portable computer, a tablet computer, a laptop computer, or any computing device operable to perform data communication operations. Many suitable devices combine some or all of these functions. In some embodiments, the client node 202 is not a general purpose computing device like a portable, laptop, or tablet computer, but rather is a special-purpose communications device such as a telecommunications device installed in a vehicle. The client node 202 may likewise be a device, include a device, or be included in a device that has similar capabilities but that is not transportable, such as a desktop computer, a set-top box, or a network node. In these and other embodiments, the client node 202 may support specialized activities such as gaming, inventory control, job control, task management functions, and so forth.

In various embodiments, the client node 202 includes a display 204. In these and other embodiments, the client node 202 may likewise include a touch-sensitive surface, a keyboard or other input keys 206 generally used for input by a user. The input keys 206 may likewise be a full or reduced alphanumeric keyboard such as QWERTY, Dvorak, AZERTY, and sequential keyboard types, or a traditional numeric keypad with alphabet letters associated with a telephone keypad. The input keys 206 may likewise include a trackwheel, an exit or escape key, a trackball, and other navigational or functional keys, which may be inwardly depressed to provide further input function. The client node 202 may likewise present options for the user to select, controls for the user to actuate, and cursors or other indicators for the user to direct.

The client node 202 may further accept data entry from the user, including numbers to dial or various parameter values for configuring the operation of the client node 202. The client node 202 may further execute one or more software or firmware applications in response to user commands. These applications may configure the client node 202 to perform various customized functions in response to user interaction. Additionally, the client node 202 may be programmed or configured over-the-air (OTA), for example from a wireless network access node 'A' 210 through 'n' 216 (e.g., a base station), a server node 224 (e.g., a host computer), or a peer client node 202.

Among the various applications executable by the client node 202 are a web browser, which enables the display 204 to display a web page. The web page may be obtained from a server node 224 through a wireless connection with a wireless network 220. As used herein, a wireless network 220 broadly refers to any network using at least one wireless connection between two of its nodes. The various applications may likewise be obtained from a peer client node 202 or other system over a connection to the wireless network 220 or any other wirelessly-enabled communication network or system.

In various embodiments, the wireless network 220 comprises a plurality of wireless sub-networks (e.g., cells with corresponding coverage areas) 'A' 212 through 'n' 218. As used herein, the wireless sub-networks 'A' 212 through 'n' 218 may variously comprise a mobile wireless access network or a fixed wireless access network. In these and other embodiments, the client node 202 transmits and receives communication signals, which are respectively communicated to and from the wireless network nodes 'A' 210 through 'n' 216 by wireless network antennas 'A' 208 through 'n' 214 (e.g., cell towers). In turn, the communication signals are used by the wireless network access nodes 'A' 210 through 'n' 216 to establish a wireless communication session with the client node 202. As used herein, the network access nodes 'A' 210 through 'n' 216 broadly refer to any access node of a wireless network. As shown in Figure 2, the wireless network access nodes 'A' 210 through 'n' 216 are respectively coupled to wireless sub-networks 'A' 212 through 'n' 218, which are in turn connected to the wireless network 220.

In various embodiments, the wireless network 220 is coupled to a physical network 222, such as the Internet. Via the wireless network 220 and the physical network 222, the client node 202 has access to information on various hosts, such as the server node 224. In these and other embodiments, the server node 224 may provide content that may be shown on the display 204 or used by the client node processor 110 for its operations. Alternatively, the client node 202 may access the wireless network 220 through a peer client node 202 acting as an intermediary, in a relay type or hop type of connection. As another alternative, the client node 202 may be tethered and obtain its data from a linked device that is connected to the wireless network 212. Skilled practitioners of the art will recognize that many such embodiments are possible and the foregoing is not intended to limit the spirit, scope, or intention of the disclosure.

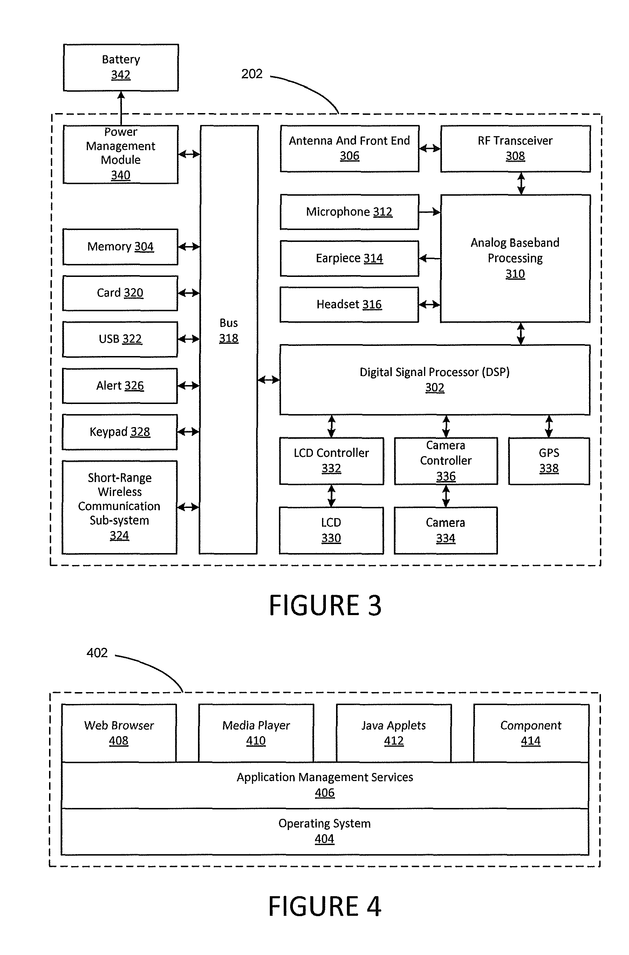

Figure 3 depicts a block diagram of an exemplary client node as implemented with a digital signal processor (DSP) in accordance with an embodiment of the invention. While various components of a client node 202 are depicted, various embodiments of the client node 202 may include a subset of the listed components or additional components not listed. As shown in Figure 3, the client node 202 includes a DSP 302 and a memory 304. As shown, the client node 202 may further include an antenna and front end unit 306, a radio frequency (RF) transceiver 308, an analog baseband processing unit 310, a microphone 312, an earpiece speaker 314, a headset port 316, a bus 318, such as a system bus or an input/output (I/O) interface bus, a removable memory card 320, a universal serial bus (USB) port 322, a short range wireless communication sub-system 324, an alert 326, a keypad 328, a liquid crystal display (LCD) 330, which may include a touch sensitive surface, an LCD controller 332, a charge-coupled device (CCD) camera 334, a camera controller 336, and a global positioning system (GPS) sensor 338, and a power management module 340 operably coupled to a power storage unit, such as a battery 342. In various embodiments, the client node 202 may include another kind of display that does not provide a touch sensitive screen. In one embodiment, the DSP 302 communicates directly with the memory 304 without passing through the input/output interface 318.

In various embodiments, the DSP 302 or some other form of controller or central processing unit (CPU) operates to control the various components of the client node 202 in accordance with embedded software or firmware stored in memory 304 or stored in memory contained within the DSP 302 itself. In addition to the embedded software or firmware, the DSP 302 may execute other applications stored in the memory 304 or made available via information carrier media such as portable data storage media like the removable memory card 320 or via wired or wireless network communications. The application software may comprise a compiled set of machine-readable instructions that configure the DSP 302 to provide the desired functionality, or the application software may be high-level software instructions to be processed by an interpreter or compiler to indirectly configure the DSP 302.

The antenna and front end unit 306 may be provided to convert between wireless signals and electrical signals, enabling the client node 202 to send and receive information from a cellular network or some other available wireless communications network or from a peer client node 202. In an embodiment, the antenna and front end unit 106 may include multiple antennas to support beam forming and/or multiple input multiple output (MIMO) operations. As is known to those skilled in the art, MIMO operations may provide spatial diversity which can be used to overcome difficult channel conditions or to increase channel throughput. Likewise, the antenna and front end unit 306 may include antenna tuning or impedance matching components, RF power amplifiers, or low noise amplifiers.

In various embodiments, the RF transceiver 308 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 310 or the DSP 302 or other central processing unit. In some embodiments, the RF Transceiver 108, portions of the Antenna and Front End 306, and the analog base band processing unit 310 may be combined in one or more processing units and/or application specific integrated circuits (ASICs).

The analog baseband processing unit 310 may provide various analog processing of inputs and outputs, for example analog processing of inputs from the microphone 312 and the headset 316 and outputs to the earpiece 314 and the headset 316. To that end, the analog baseband processing unit 310 may have ports for connecting to the built-in microphone 312 and the earpiece speaker 314 that enable the client node 202 to be used as a cell phone. The analog baseband processing unit 310 may further include a port for connecting to a headset or other hands-free microphone and speaker configuration. The analog baseband processing unit 310 may provide digital-to-analog conversion in one signal direction and analog-to-digital conversion in the opposing signal direction. In various embodiments, at least some of the functionality of the analog baseband processing unit 310 may be provided by digital processing components, for example by the DSP 302 or by other central processing units.

The DSP 302 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 302 may perform modulation, coding, interleaving, and spreading, and for a receiver function the DSP 302 may perform despreading, deinterleaving, decoding, and demodulation. In another embodiment, for example in an orthogonal frequency division multiplex access (OFDMA) technology application, for the transmitter function the DSP 302 may perform modulation, coding, interleaving, inverse fast Fourier transforming, and cyclic prefix appending, and for a receiver function the DSP 302 may perform cyclic prefix removal, fast Fourier transforming, deinterleaving, decoding, and demodulation. In other wireless technology applications, yet other signal processing functions and combinations of signal processing functions may be performed by the DSP 302.

The DSP 302 may communicate with a wireless network via the analog baseband processing unit 310. In some embodiments, the communication may provide Internet connectivity, enabling a user to gain access to content on the Internet and to send and receive e-mail or text messages. The input/output interface 318 interconnects the DSP 302 and various memories and interfaces. The memory 304 and the removable memory card 320 may provide software and data to configure the operation of the DSP 302. Among the interfaces may be the USB interface 322 and the short range wireless communication sub-system 324. The USB interface 322 may be used to charge the client node 202 and may also enable the client node 202 to function as a peripheral device to exchange information with a personal computer or other computer system. The short range wireless communication sub-system 324 may include an infrared port, a Bluetooth interface, an IEEE 802.11 compliant wireless interface, or any other short range wireless communication sub-system, which may enable the client node 202 to communicate wirelessly with other nearby client nodes and access nodes.

The input/output interface 318 may further connect the DSP 302 to the alert 326 that, when triggered, causes the client node 202 to provide a notice to the user, for example, by ringing, playing a melody, or vibrating. The alert 326 may serve as a mechanism for alerting the user to any of various events such as an incoming call, a new text message, and an appointment reminder by silently vibrating, or by playing a specific pre-assigned melody for a particular caller.

The keypad 328 couples to the DSP 302 via the I/O interface 318 to provide one mechanism for the user to make selections, enter information, and otherwise provide input to the client node 202. The keyboard 328 may be a full or reduced alphanumeric keyboard such as QWERTY, Dvorak, AZERTY and sequential types, or a traditional numeric keypad with alphabet letters associated with a telephone keypad. The input keys may likewise include a trackwheel, an exit or escape key, a trackball, and other navigational or functional keys, which may be inwardly depressed to provide further input function. Another input mechanism may be the LCD 330, which may include touch screen capability and also display text and/or graphics to the user. The LCD controller 332 couples the DSP 302 to the LCD 330.

The CCD camera 334, if equipped, enables the client node 202 to take digital pictures. The DSP 302 communicates with the CCD camera 334 via the camera controller 336. In another embodiment, a camera operating according to a technology other than Charge Coupled Device cameras may be employed. The GPS sensor 338 is coupled to the DSP 302 to decode global positioning system signals or other navigational signals, thereby enabling the client node 202 to determine its position. Various other peripherals may also be included to provide additional functions, such as radio and television reception.

Figure 4 illustrates a software environment 402 that may be implemented by a digital signal processor (DSP). In this embodiment, the DSP 302 shown in Figure 3 executes an operating system 404, which provides a platform from which the rest of the software operates. The operating system 404 likewise provides the client node 202 hardware with standardized interfaces (e.g., drivers) that are accessible to application software. The operating system 404 likewise comprises application management services (AMS) 406 that transfer control between applications running on the client node 202. Also shown in Figure 4 are a web browser application 408, a media player application 410, and Java applets 412. The web browser application 408 configures the client node 202 to operate as a web browser, allowing a user to enter information into forms and select links to retrieve and view web pages. The media player application 410 configures the client node 202 to retrieve and play audio or audiovisual media. The Java applets 412 configure the client node 202 to provide games, utilities, and other functionality. A component 414 may provide functionality described herein. In various embodiments, the client node 202, the wireless network nodes 'A' 210 through 'n' 216, and the server node 224 shown in Figure 2 may likewise include a processing component that is capable of executing instructions related to the actions described above.

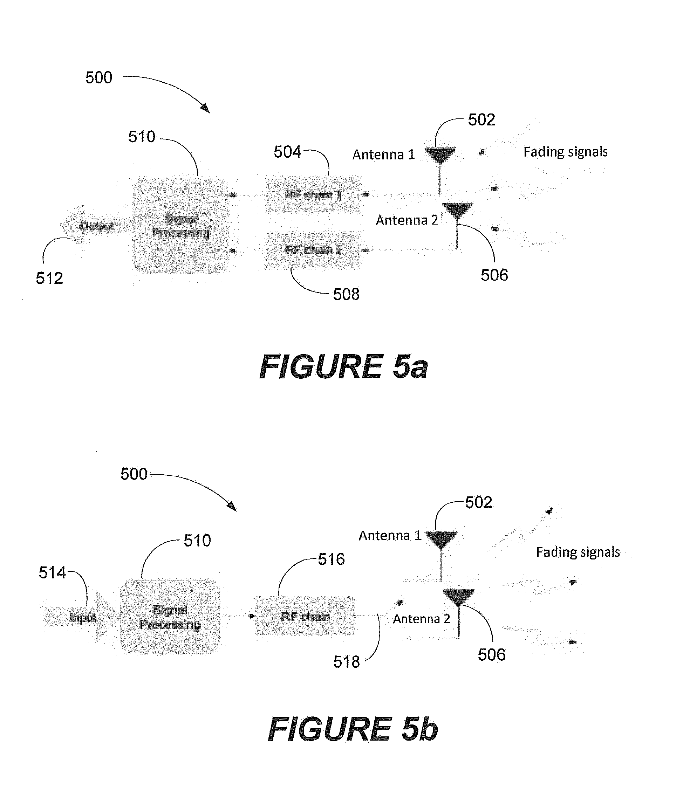

Figures 5a and 5b are generalized illustrations of communication systems for implementing antenna diversity techniques in accordance with embodiments of the present disclosure. Referring to Figure 5a, a UE 500 comprises a first antenna 502 that receives fading signals and provides an input to a first RF chain 504 and a second antenna 506 that also receives fading signals and provides an input to a second RF chain 508. The RF chains 504 and 508 each process the input signals from the respective antennas and provide output signals that are then provided as inputs to a signal processing module 510. The signal processing module then processes these input signals and generates output signals 512 that are processed by the various signal processing modules discussed hereinabove in connection with Figures 1-4.

Figure 5b is an illustration of the processing modules for transmitting uplink signals on one of the two antennas 502 or 506 shown in Figure 5a. In this embodiment, input signals 514 are received by signal processing module 510 from the various modules shown in Figures 1-4 and an up-link signal is generated therefrom. The output signal from signal processing module 510 is processed by RF chain 516 to generate an up-link signal and that up-link signal is provided to a diversity switch that is connected to either antenna 502 or 506, depending on the outcome of processing steps discussed hereinbelow.

As will be understood by those of skill in the art, two DL receive antennas 502 and 506 are described in 4G Long Term Evolution (LTE) Rel'8 as a requirement and in 3G UMTS as an optional feature. On the UL, however, the requirements are for transmission on a single antenna. The general assumption is that the UL transmission would always occur on the same antenna. In the various embodiments, such as those described above, the UE has in fact a choice of transmission on either of the two antennas since the antennas 502 or 506 and their respective RF chains would already exist as per signal diversity requirements on the DL.

There are several benefits of UL antenna selection that can be realized by implementing embodiments of the present disclosure. For example, there is improvement in UL link performance as measured in the long term due to the imbalance in the UL performance between the two antennas on the UE. The imbalance is a measure of the relative difference in performance between the two antennas, i.e., how much one of the antennas is performing better or worse than the other antenna in a given usage scenario.

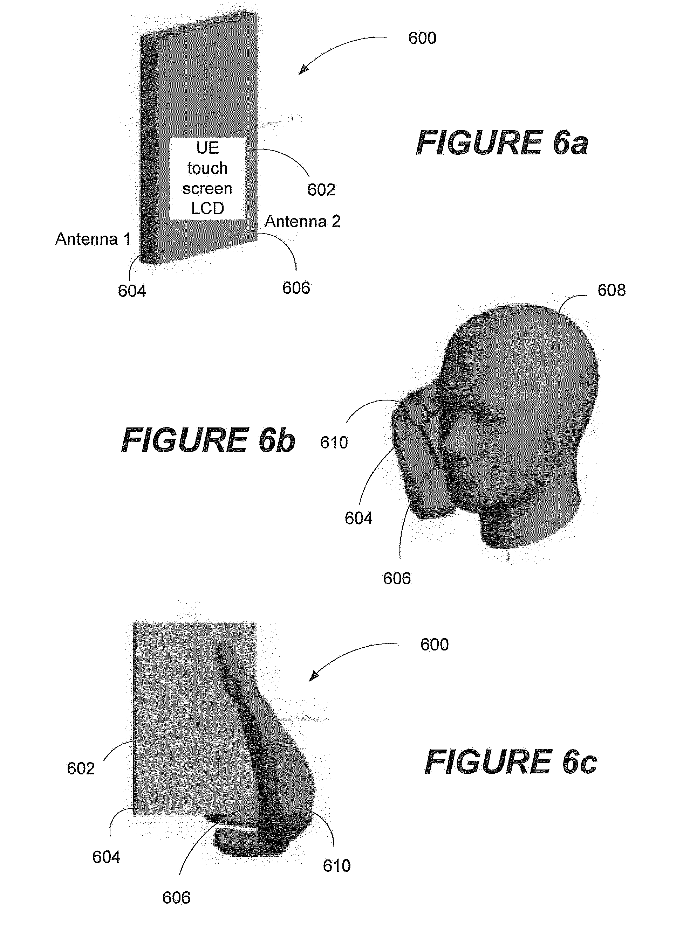

As discussed herein, the operating user can have significantly more impact on one of the antennas over the other, depending on the usage mode and the type of antenna, as well as where each antenna is placed in the device. This is illustrated in the three modes of UE operation shown in Figures 6a-c. Referring to Figure 6a, a user device 600 comprises a touch screen 602 and two antennas 602 and 604 that are located on opposite sides of the lower portion of the user equipment 600 where the two antennas are identically designed and oriented co-polarized to each other. Figure 6a is an illustration of a scenario wherein it is assumed that no obstacles or user are in the vicinity of the UE 600. Figure 6b is an illustration of a operation of the UE voice mode where the user's head 608 and hand 610 are in the vicinity of the UE 600. Figure 6c is an illustration of a scenario wherein a user's hand 610 is holding the UE 600 on one of its longitudinal sides operating the device in data mode. The scenarios shown in Figures 6a and 6c represent the two extreme cases. In the scenario shown in Figure 6a, both antennas 604 and 608 experience the same environment and, therefore, perform identically since they were identically designed. In the other extreme case, shown in Figure 6c, antenna 606 is almost completely covered by the user's hand while antenna 604 is mostly unaffected. Therefore, the scenario shown in Figure 6c results in the largest imbalance between the two antennas. The voice mode of the scenario shown in Figure 6b represents a random intermediate case where both antennas are affected by the user, albeit unequally.

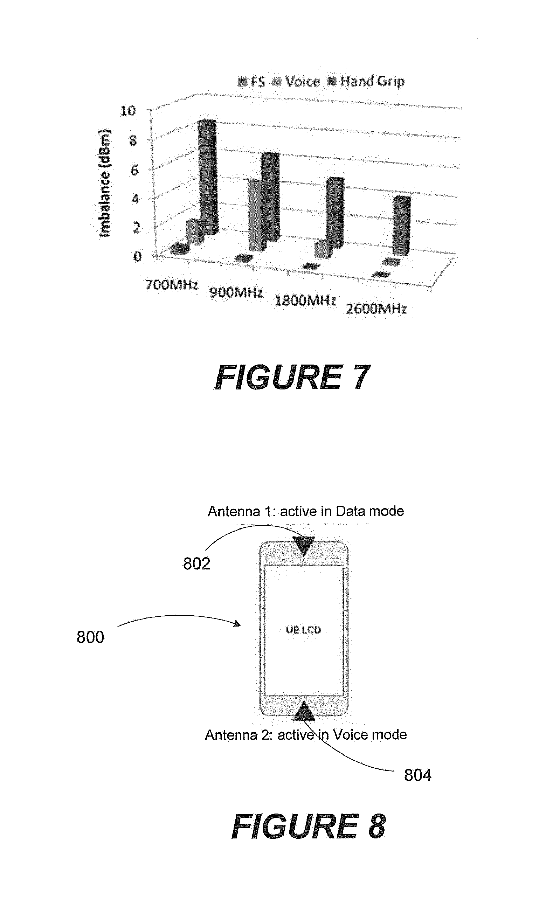

Figure 7 shows the shows the imbalance between the two antennas defined as the difference in the measured Total Radiation Power (TRP) between the two antennas. Notice that, for the design at hand, the two extreme cases given in Figure 6a (free space) and Figure 6c show that the imbalance between the antennas is more pronounced at lower frequencies. The imbalance in the voice usage mode shown in Figure 6b depends on the placement of the user's hand and the proximity of the head with respect to the current distribution on the surface of each antenna. The current distribution changes with different operating frequencies even for the same antenna design. Hence, a random behavior of the imbalance between the antennas at the different investigated frequencies is observed.

The impact of the user on antenna performance can be understood by considering the performance, shown in Figure 7, for the antennas in the scenario shown in Figure 6b. As discussed earlier, both antennas are designed to have identical structures and hence to achieve near identical performance both on the UL and the DL in free space. In the practical usage scenario shown in Figure 6b, due to hand placement, antenna 606 suffers a 6 dB degradation both in the UL and DL when compared to antenna 604. This 6 dB in degradation should be reflected in DL signal power measurements on each antenna if made over a period of time. The antenna with the greater of the signal power measurements, in this case antenna 604 by 6 dB, can then be selected for UL transmission.

As will be understood by those of skill in the art, without UL antenna selection one of the two available antennas would be designated the primary antenna and all UL transmissions would always occur on that antenna. The benefit of antenna selection, therefore, is in the use cases where the primary antenna is not in fact the better performing antenna due to real-world effects. In such cases by selecting the non-primary but better performing antenna for UL transmission at that time, either a link performance improvement equal to the difference in UL performance between the non-primary and primary antennas or an improvement in battery life proportional to the power saving achieved because of using the antenna with better radiation characteristic can be achieved. Embodiments for implementing antenna selection will be discussed in greater detail herein below.

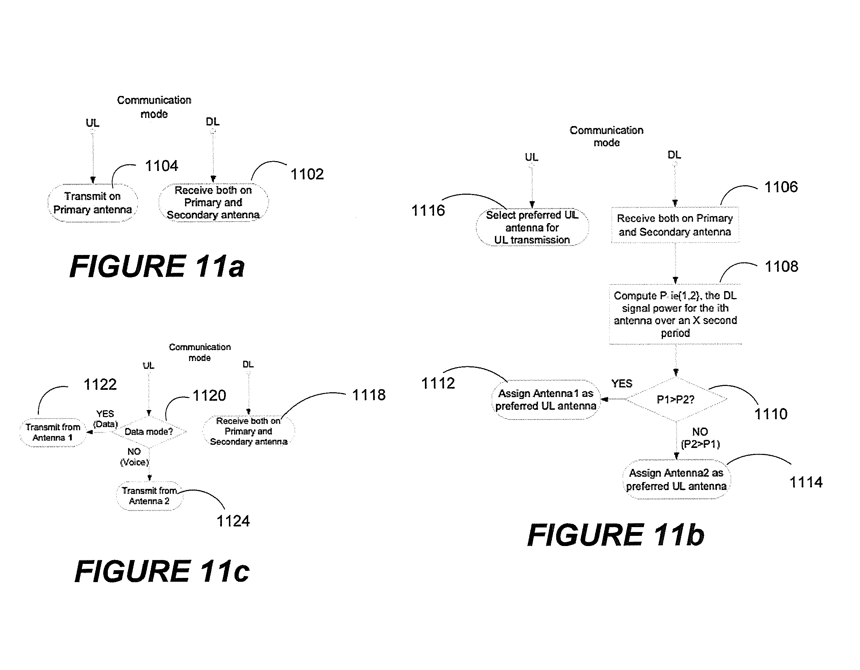

Another benefit of the antenna selection techniques described herein is to improve UL performance in certain scenarios while maintaining compliance with FCC regulations on Specific Absorption Rates (SAR). In order to maximize receive diversity performance on the DL, one possible configuration of the two DL antennas could be to place them at the longitudinal ends of the UE device to ensure the greatest spatial diversity possible. This configuration is shown generally in Figure 8 for a UE 800 having an antenna 802 at the top and another antenna 804 at the bottom. With this configuration, however, only the antenna 804, that is placed at the bottom of the UE device, can be assigned as the primary-antenna and be used as the UL transmission antenna in order to maintain compliance for SAR in the voice mode. On the other hand, in the data mode, using the bottom antenna is unlikely to be the best choice since it most likely will be covered by the user's hand(s). Therefore, having a choice to switch between the antenna that is placed on the top of the UE and the one placed on the bottom in the UL, based on the data vs. voice usage modes, can meaningfully improve performance over the case where transmission is always from the same primary-antenna on the bottom. Techniques for implementing this embodiment will be discussed in greater detail below in connection with Figure 11c.

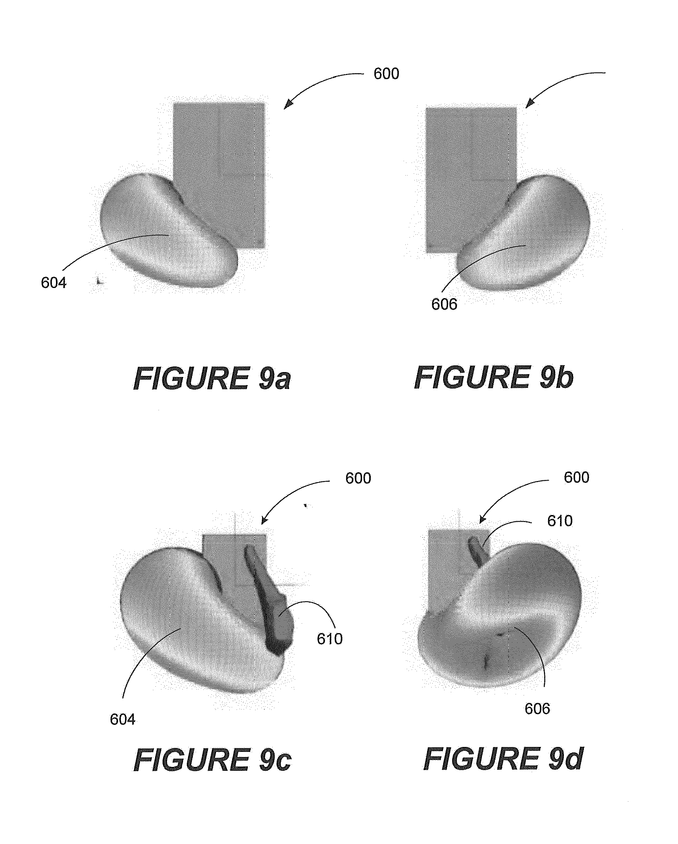

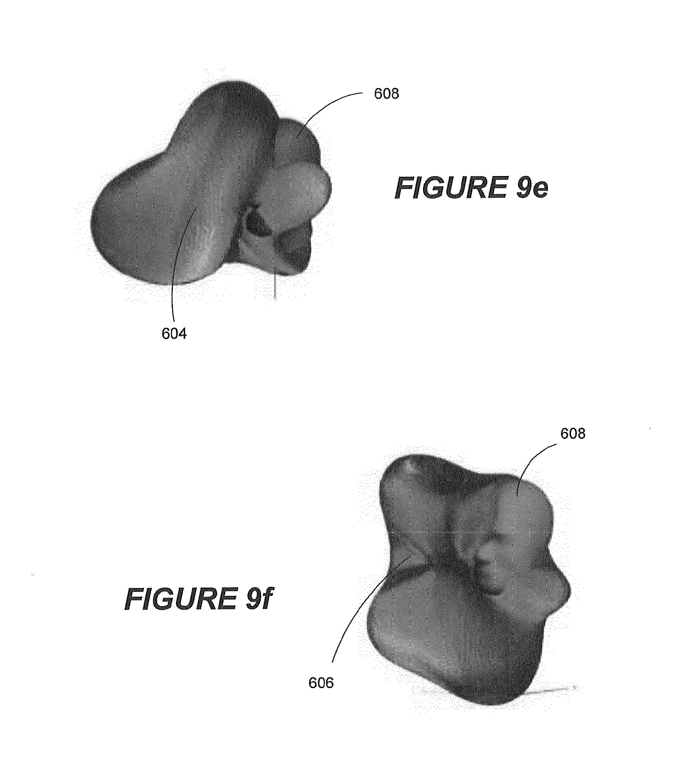

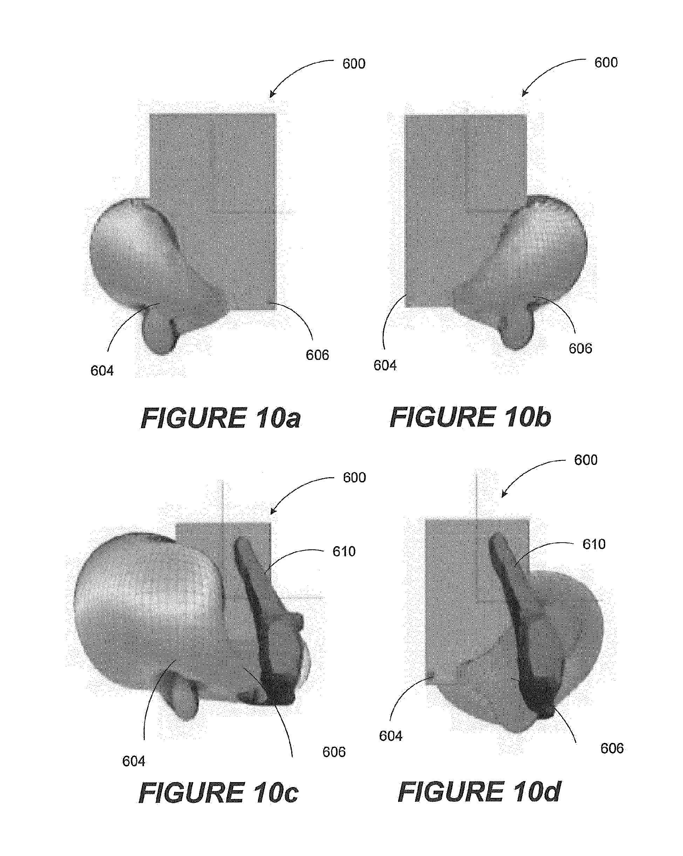

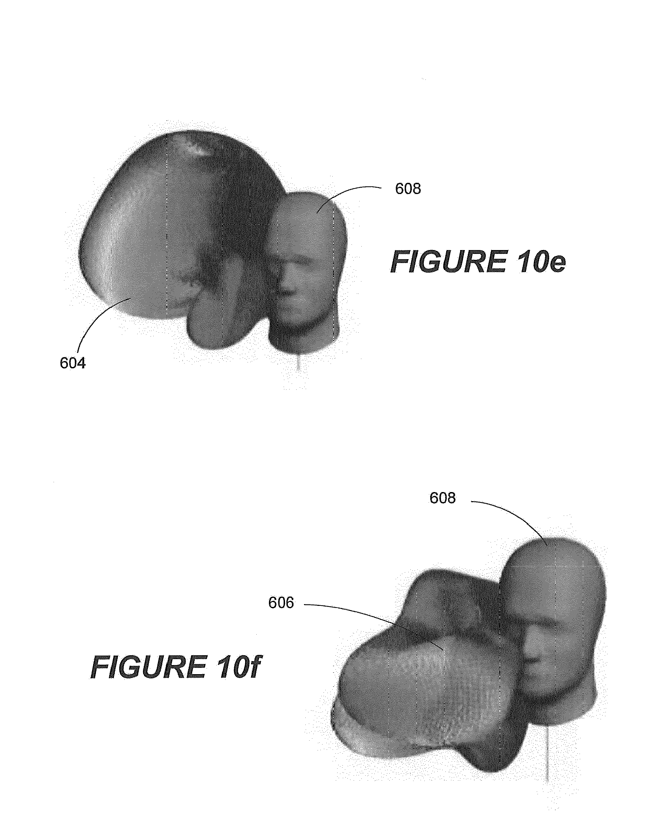

As will be understood by those of skill in the art, the antenna radiation pattern is the means by which the UE interacts with the communication channel environment. The antennas' radiation patterns change significantly with the interactions of the user with the device when used. Also, this interaction changes significantly with the change in the operating frequency for the same usage scenario. Figures 9a-f and Figures 10 a-f show the user's impact on radiation pattern of each of the two antennas at 900 MHz and at 1880MHz, respectively. Figures 9a and 9b are illustrations of free space (i.e., a no-user scenario) radiation patterns for antennas 604 and 606, respectively, at 900 MHz. These illustrations show that both antennas have essentially identical performance when no obstacles are in their vicinity. Figures 9c and 9d show radiation patterns for antennas 604 and 606, respectively, at 900 MHz when the user equipment 600 is being used in data mode with the user holding the device with a right hand 610. These illustrations show that the presence of the user's right hand on the device has a significant impact on the performance of the respective antennas. Figures 9e and 9f are illustrations of the radiation patterns for antennas 604 and 608, respectively, when the user device is being used adjacent to the head 608 of the user. Again, these illustrations show that the presence of the user's head in close proximity to the user device hand on the device has a significant impact of performance of the antennas 604 and 606. Figures 10a-e correspond the scenarios discussed hereinabove in connection with Figures 9e-f, but for an operating frequency of 1880 MHz.

As will be understood by those of skill in the art, the presence of the user loading affects each antenna electrical size and structure differently, resulting in the different non-homogeneous radiation patterns as shown in Figures 9a-e and 10 a-f. Antenna selection allows the ability to choose the UL antenna more suited to the channel propagation conditions including radiation pattern considerations. In particular, assuming radiation pattern is agnostic with regard to the UL or DL frequency, the antenna that maximizes the desired user's signal power on the DL is therefore also the antenna with a radiation pattern most suitable for UL transmission. As will be understood by those of skill in the art, the total received signal consists of the desired signal component, interfering signal components (intended for other users) and an additive white Gaussian noise component (remaining noise sources such as thermal noise).

As discussed above, the embodiments of antenna diversity by means of antenna selection in the UL, as described herein, can be implemented for 3G and Long Term Evolution (LTE/4G) technologies. One feature contributing to the improvements is the requirement to support multiple antennas in the DL. By contrast, UL transmission occurs on one antenna only leading to the possibility of selection between the two available antennas.

Embodiments of the disclosure will now be discussed in connection with three potential approaches of UE antenna selection on the UL for LTE. Figure 11a illustrates the simplest embodiment. In step 1102, both antennas are used for reception on the DL. In step 1104, the primary antenna is always used for UL transmission.

A second embodiment is shown in Figure 11b. While the DL signal is received on both the primary and secondary antennas in step 1106, one of these antennas is designated as the preferred antenna based on baseband measurements made on the DL. In step 1108, during DL operation, the DL desired signal power is measured on each antenna at baseband over a defined period of time. Assuming the antenna gain imbalance is the same both in the UL and DL directions then, in step 1110, the desired signal power for each antenna, i.e., P1 for the primary and P2 for the secondary antenna, is measured. If the desired signal power P1 for the primary antenna is greater, then the primary antenna is designated as the preferred UL antenna in step 1112. If, however, the desired signal power P2 for the secondary antenna is greater than P1, then the secondary antenna is designated as the preferred UL antenna in step 1114. Then, in step 1116, the preferred UL antenna is selected and used for UL transmissions. Assuming both antennas are identically designed the potential gains in UL performance up to 8dB and 4dB in the hand grip and voice user scenarios can be achieved as shown in Figure 7.

Figure 11(c) is a flowchart for implementing another embodiment of the disclosure. In this embodiment, it is envisaged a first antenna is placed at the top of a UE, while a second antenna is placed at the bottom. Because of these placements, it is possible that the first antenna could violate SAR regulations during a voice conversation when the first antenna is located near the users head. For this reason the second antenna would be used during a voice call. To implement this embodiment, in step 1118, the UE receives on both the primary and the secondary antennas. In step 1120, a test is conducted to determine the data mode. This test may include but not limited to checking for things like the active applications in the phone, whether or not a head phone/microphone is connected to the phone during a speech call, if the user is using the device key board etc. If the result of the test in step 1120 indicates that the data mode is data (i.e. device likely held away from head), the first antenna (top) is used for UL transmission. If however, the test in step 1120 indicates that the mode is voice (i.e. the device is likely held close to head/ear), the second antenna (bottom) is used for UL transmission.

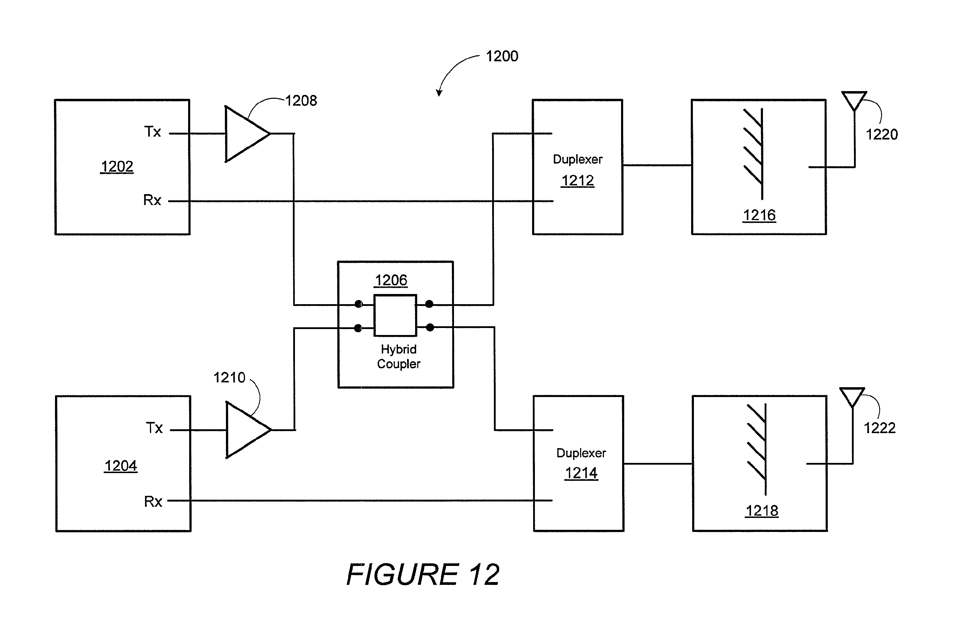

Figures 12-14 are illustrations of example system block diagrams for implementing embodiments of the disclosure. Referring to Figure 12, an embodiment of the disclosure for implementing frequency division duplexing (FDD) comprises a communication system 1200 comprising first and second transceivers 1202 and 1204 that have their transceiver ports coupled to a hybrid coupler 1206 via power amplifiers 1208 and 1210, respectively. In some embodiments of the system shown in Figure 12, the power amplifiers 1208 and 1210 provide "half-power" output signals to the input terminals of the hybrid coupler 1206. The hybrid coupler is operable to combine the outputs of the transmit ports and to selectively provide them to duplexers 1212 and 1214. The output of the duplexers 1212 and 1214 are coupled to transmit/receive mode switches 1216 and 1218, respectively which are operable to selectively couple the out signals to antennas 1220 and 1222. The embodiment shown in Figure 12 make it possible to distribute load over more components capable of the same functionality, increasing the reliability through "soft fail," wherein "soft fail" refers to the condition where one of two transmit chain components may fail catastrophically leaving the other still functional to carry the load of the transmitter albeit at one-half of the output power.

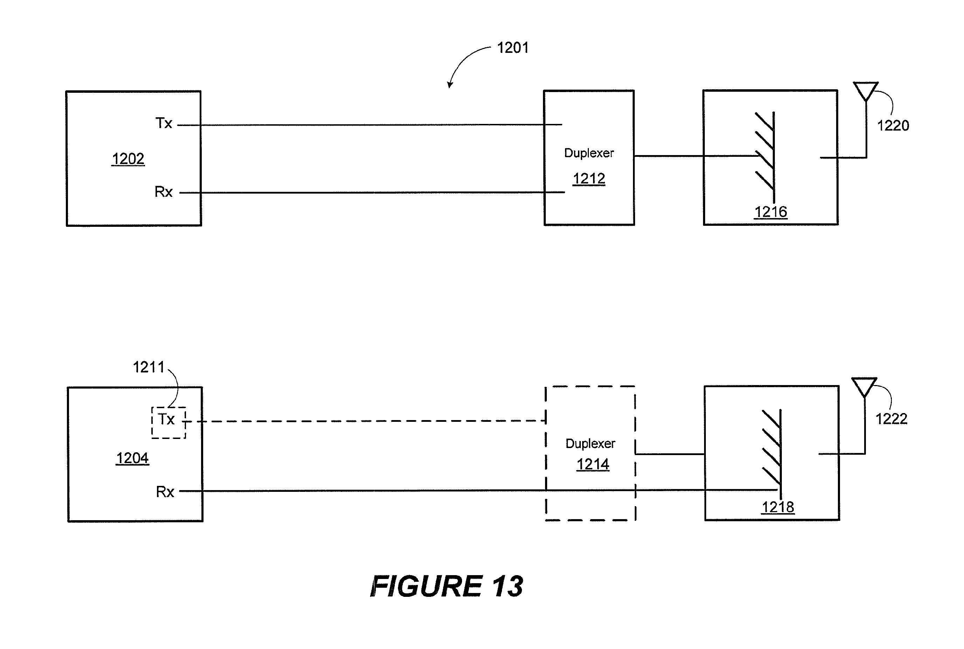

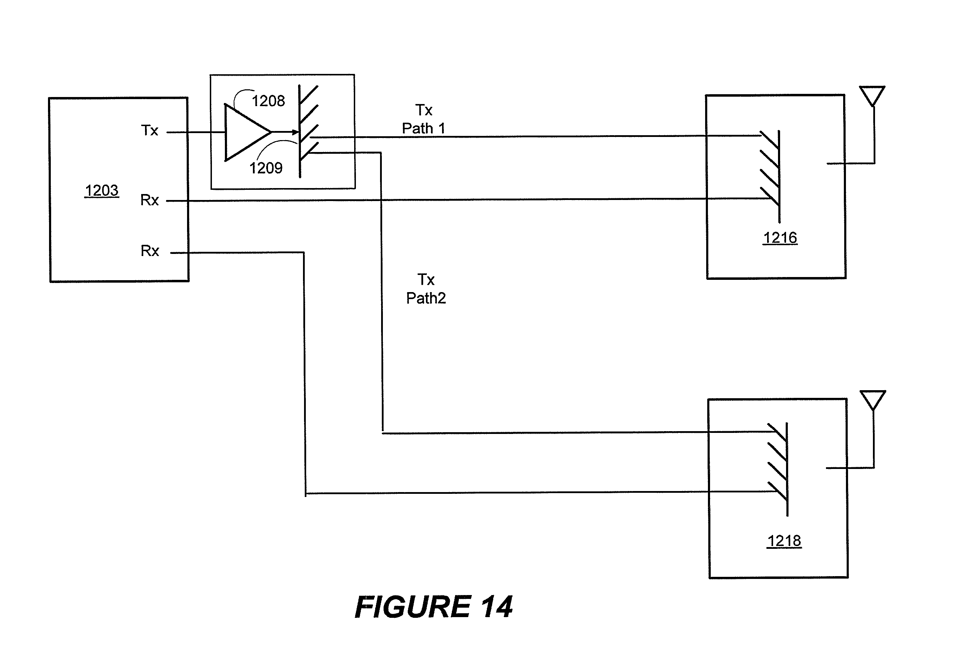

Figure 13 is an illustration of another embodiment wherein a "dormant" transmit chain 1211 is activated. As will be appreciated by those of skill in the art, many user equipment devices often comprise a second transceiver that is functional but not always activated. The dormant transceiver shown in this embodiment may be activated by known hardware, software, or firmware activation methods. Figure 14 is an illustration of another embodiment wherein a mode switch 1209 is coupled to the output of power amplifier 1208. The output of the transmit port of transceiver 1203 is routed by the mode switch 1209 in response to transmit mode select commands known to those of skill in the art.

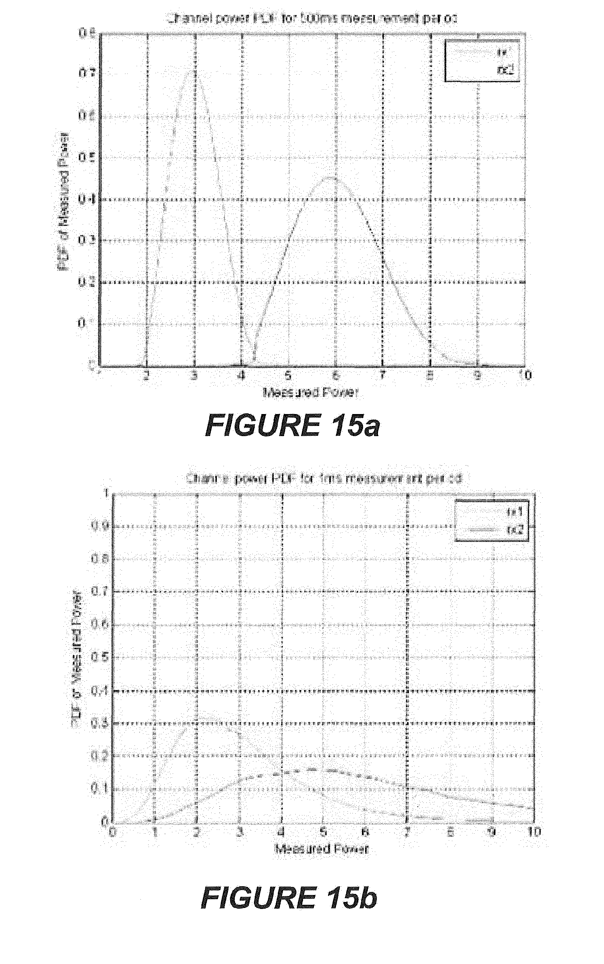

One of the issues for implementing embodiments of the disclosure as described herein is the accuracy with which the better antenna can be detected. Figures 15 a-b illustrate the PDF of desired signal power at each antenna assuming a 3dB antenna gain imbalance for 500ms and 1ms measurement periods respectively. Simulations assumed a Pedestrian-B channel and UE speed of 3kmph. Although there is significant overlap between the two distributions for the 1ms measurement period case, the greater accuracy obtained over a 500ms measurement period is reflected not only in a lower variance but also in a smaller overlap area and therefore improved accuracy in antenna selection.

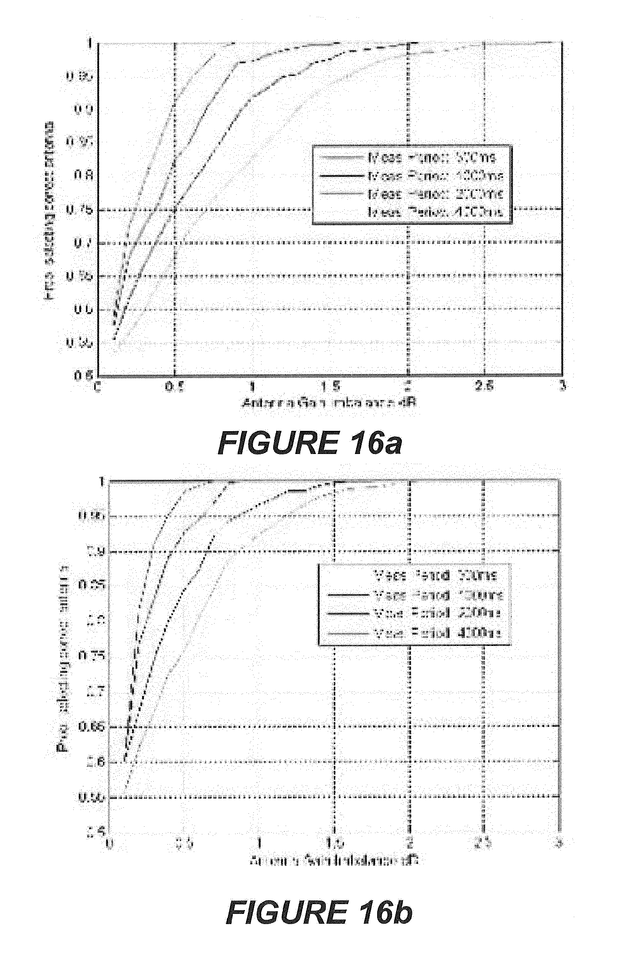

Figures 16 a-b show the probability of selecting the correct UL antenna for various differences in performance between the two UL antennas indicated as antenna gain imbalance. As an example, the green curve indicates performance of a 0.5 second (500ms) measurement period. Assuming an overall performance difference of 0.5dB between the two antennas, Figure 16a indicates that 75% of the time the better performing antenna is selected and consequently 25% of the time the poorer performing antenna is selected.

Simulations for Figures 16 a-b were carried out over a Typical Urban channel (TU) at 3kmph speed and SNR of 20dB both for 900MHz and 1880MHz carrier frequencies. From these figures it is seen measurement periods on the order of 2 seconds are necessary in order to reliably predict the better performing UL transmit antenna in particular for performance differences less than 1dB.

UMTS is a third generation mobile cellular technology providing improvements in data rates and latency over earlier 2G technologies. Although advanced receivers supporting multiple receive antennas have been specified for UMTS, such advanced receivers are optional. Nevertheless support for such options may become particularly attractive in LTE capable handsets where multiple antennas are already present. In such cases, and as with LTE, the three potential approaches of User Equipment antenna selection shown in Figures 11 a-c are also applicable for UMTS.

In particular the third approach shown in Figure 11c is of interest. In this embodiment, one of the DL antennas is designated as the preferred antenna for UL transmission based on baseband measurements made on both downlink antennas. Assuming both antennas are identically designed the potential gains in uplink performance up to 8dB and 4dB in the hand grip and voice user scenarios can be achieved as shown in Figure 7.

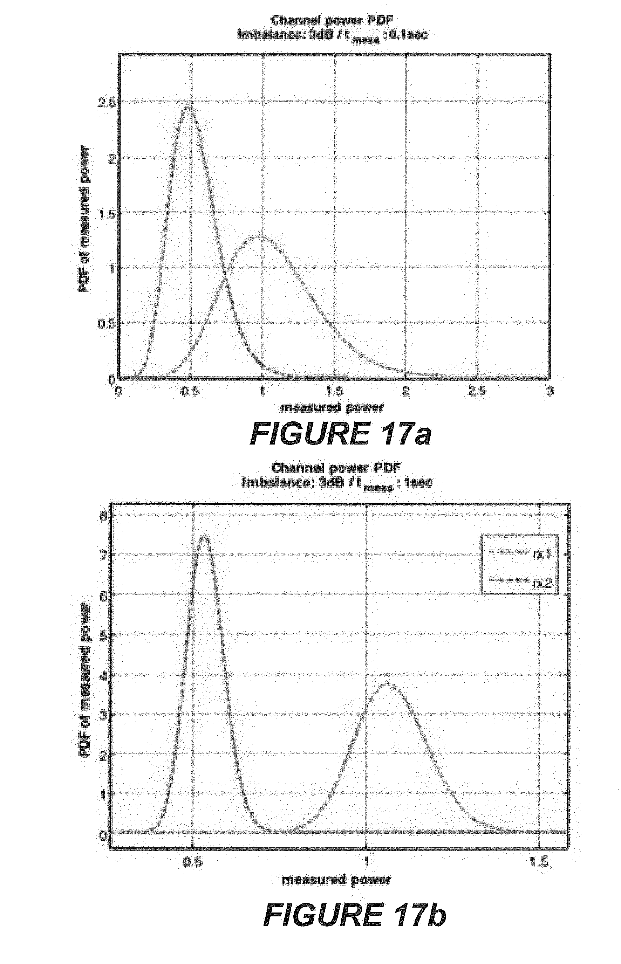

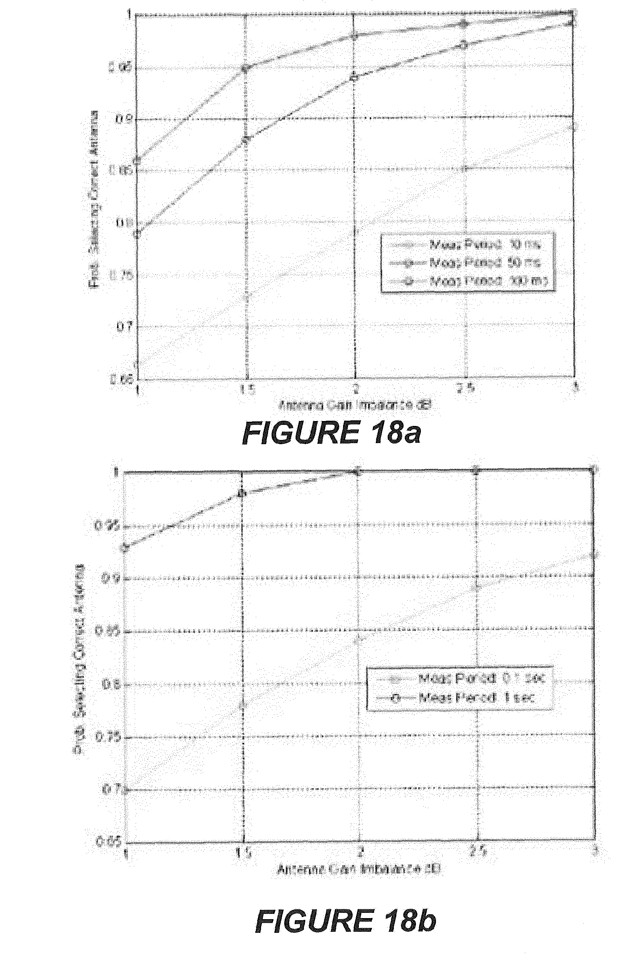

The performance of this approach is illustrated in Figures 17 a-b and Figures 18 a-b. Figures 17a-b illustrate details of the PDF of desired signal power at each antenna assuming a 3dB antenna gain imbalance for measurement periods of 0.1 seconds and 1 second respectively. Simulations assumed a Pedestrian-B channel and UE speed of 5kmph. Both in Figures 17a and 17b, the mean measurement of antenna 1 is twice that of antenna 2 reflecting the 3dB antenna gain imbalance. However the greater accuracy of measurements over a 1 second measurement period versus 0.1 second measurement period is reflected in a lower variance of measurements with respect to the mean in Figure 17b compared to Figure 17a and, consequently, a smaller area of overlap of the two antenna PDFs.

In Figures 18a-b the probability of selecting the correct UL antenna is shown for various differences in performance between the two UL antennas indicated as antenna gain imbalance. Simulations assumed a Pedestrian-B channel, SNR of 0dB and UE speeds of 30kmph. From these figure it is seen that a measurement period of 0.1 seconds results in correct selection of the better of the two antennas 95% of the time assuming a 1.5dB imbalance between the two antennas. As indicated in Figures 16 a-b and Figures 17 a-b, by increasing the measurement period, a more complete sampling of the fading process is achieved and therefore more accurate estimation of the received power and therefore antenna selection is obtained. From these figures, it is seen that a measurement period of 0.1 seconds results in correct selection of the better of the two antennas 95% of the time assuming a 1.5dB imbalance between the two antennas. As indicated in Figures 17 a-b and Figures 18a-b, by increasing the measurement period, a more complete sampling of the fading process is achieved and therefore more accurate estimation of the received power and therefore antenna selection is obtained.

The evolution of modern cellular standards has led to the required UE support of multiple antennas for downlink reception with only a single antenna for uplink transmission for technologies such as LTE and UMTS. Within the context of these standards, antenna selection can not only provide uplink benefits at the link level by detecting imbalances in performance between the available antennas in the downlink, but can also aid in maintaining compliance with FCC regulations on Specific Absorption Rates.

Although the described exemplary embodiments disclosed herein are described with reference to estimating the impedance of antennas in wireless devices, the present disclosure is not necessarily limited to the example embodiments which illustrate inventive aspects of the present invention that are applicable to a wide variety of authentication algorithms. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

## Claims

1. A wireless user equipment device (202, 500, 600, 800), comprising:
at least a first and a second antenna (306, 502, 506, 604, 606, 802, 804);
processing logic (110, 302) operable to:
receive (1102, 1106, 1118) downlink signals on said first and second antennas (306, 502, 506, 604, 606, 802, 804);
process (1108) said received downlink signals to generate first and second received desired user power measurements corresponding downlink desired user signals received on said first and second antennas (306, 502, 506, 604, 606, 802, 804);
determine (1110) the antenna (306, 502, 506, 604, 606, 802, 804) with the higher received desired user power measurement for said received downlink signals;
select (1112, 1114) the antenna (306, 502, 506, 604, 606, 802, 804) with the higher desired user received downlink signal power measurement; and
use (1112, 1114) the selected antenna (306, 502, 506, 604, 606, 802, 804) for uplink signal transmissions from said user equipment device (202, 500, 600, 800).

2. The wireless user equipment device (202, 500, 600, 800) of claim 1, wherein said processing logic (110, 302) uses a predetermined offset threshold of received desired user downlink signal power to select said first or second antenna (306, 502, 506, 604, 606, 802, 804) for uplink signal transmissions.

3. The wireless user equipment device (202, 500, 600, 800) of claim 2, wherein said offset threshold is signaled to said user equipment device (202, 500, 600, 800) by an eNode B.

4. The wireless user equipment device (202, 500, 600, 800) of any of the preceding claims, wherein said processing logic (110, 302) uses an estimation of uplink channel capacity to select the antenna (306, 502, 506, 604, 606, 802, 804) for said uplink signal transmissions.

5. The wireless user equipment device (202, 500, 600, 800) of any of the preceding claims, wherein the processing (1108) of said received desired user downlink signal power measurements comprises estimation of the signal-to-noise ratio of the received downlink signals.

6. The wireless user equipment device (202, 500, 600, 800) of any of the preceding claims, wherein said processing (1108) of said received downlink signal comprises correlating a known reference sequence with the received downlink signals on said first and second antennas (306, 502, 506, 604, 606, 802, 804).

7. A method for transmitting signals on a wireless user equipment device (202, 500, 600, 800), the method comprising:
using first and second antennas (306, 502, 506, 604, 606, 802, 804) downlink signals from an eNode B;
using processing logic (110, 302) to process said received downlink signals, said processing logic (110, 302) operable to:
receive (1102, 1106, 1118) downlink signals on said first and second antennas (306, 502, 506, 604, 606, 802, 804);
process (1108) said received downlink signals to generate first and second desired user received power measurements corresponding downlink signals received on said first and second antennas (306, 502, 506, 604, 606, 802, 804);
determine (1110) the antenna (306, 502, 506, 604, 606, 802, 804) with the higher received desired user power measurement for said received downlink signals;
select (1112, 1114) the antenna (306, 502, 506, 604, 606, 802, 804) with the higher desired user received downlink signal power measurement; and
use (1112, 1114) the selected antenna (306, 502, 506, 604, 606, 802, 804) for uplink signal transmissions from said user equipment device (202, 500, 600, 800).

8. The method of claim 7, wherein said processing logic (110, 302) uses a predetermined offset threshold of received downlink signal power to select said first or second antenna (306, 502, 506, 604, 606, 802, 804) for uplink signal transmissions.

9. The method of claim 8, wherein said offset threshold is signaled to said user equipment device (202, 500, 600, 800) by an eNode B.

10. The method of any of claims 7 through 9, wherein said processing logic (110, 302) uses an estimation of uplink channel capacity to select the preferred antenna (306, 502, 506, 604, 606, 802, 804) for said uplink signal transmissions.

11. The method of any of claims 7 through 10, wherein the processing (1108) of said received downlink desired user signal power measurements comprises estimation of the signal-to-noise ratio of the received downlink signals.

12. The method of any of claims 7 through 11, wherein said processing (1108) of said received downlink signal comprises correlating a known reference sequence with the received downlink signals on said first and second antennas (306, 502, 506, 604, 606, 802, 804).
